Europäisches Patentamt

European Patent Office

Office européen des brevets

(11) Publication number: **0 056 419**

**A1**

# EUROPEAN PATENT APPLICATION

published in accordance with Art. 158(3) EPC

(21) Application number: 81902242.7

(22) Date of filing: 24.07.81

Data of the international application taken as a basis:

(86) International application number:
PCT/JP81/00168

(87) International publication number:
WO82/00431 (18.02.82 82/06)

(51) Int. Cl.³: **B 25 J 19/00**

(30) Priority: 25.07.80 JP 101225/80

(43) Date of publication of application:
28.07.82 Bulletin 82/30

(84) Designated Contracting States:
DE FR GB

(71) Applicant: FUJITSU FANUC LIMITED
5-1, Asahigaoka, 3-chome
Hino-shi, Tokyo 191(JP)

(72) Inventor: INABA, Hajimu
5-3-16, Asahigaoka
Hino-shi Tokyo 191(JP)

(72) Inventor: KITA, Masao
25-15, Kitaaobadai
Kawachinagano-shi Osaka 586-01(JP)

(72) Inventor: SAKAKIBARA, Shinsuke
1-2-12-6, Naka
Kunitachi-shi Tokyo 186(JP)

(72) Inventor: NIHEI, Ryo
1-34-7-202, Honcho
Kichijoji, Musashino-shi Tokyo 180(JP)

(74) Representative: Allman, Peter John et al,
Marks and Clerk Scottish Life House Bridge Street
Manchester M3 3DP(GB)

(54) SAFETY MECHANISM FOR INDUSTRIAL ROBOT.

(57) A safety mechanism for an industrial robot constructed as a mechanism for mechanically locking a movable unit (12) for the robot by providing a pair of male and female connectors (30,42) between the movable unit (12) and a locking plate (40) provided separately from the robot and engaging the male and female connectors. The industrial robot and the locking plate confront each other on a stationary base (50) via connectors opposed to one another, and the male and female connectors are locked and engaged by moving the robot or the locking plate.

*Fig. 2*

0056419

TITLE MODIFIED

see front page

## A SAFEGUARD MECHANISM OF AN INDUSTRIAL ROBOT

TECHNICAL FIELD

The present invention relates to an industrial robot used so as to cooperate with machines, such as automatic machine tools, and more particularly relates to a safeguard mechanism of an industrial robot provided in order to prevent accidents, such as collision of a movable part of the robot with a machine or machines located around the robot or injury to the operator resulting from the operator being struck by a movable part of the robot, which might occur when the movable part of the robot is moved by the generation of erroneous control signals or by the application of noise signals from outside the industrial robot, the mechanism being capable of enhancing the operational safety of the industrial robot.

BACKGROUND TECHNICS

Recently, industrial robots have been used so as to cooperate with machines, such as automatic machine tools, for the purpose of promoting automatic operation of the machine tools. In such a case, the manipulating operations of the industrial robots are adapted to the machining operation of the machine tools so that the transferring of a workpiece to and from the machine tools or the loading of a workpiece to or the unloading of a workpiece from the machine tool is automatically carried out. The operation of the industrial robot is controlled by a separate robot controller in which prescribed instructions for accomodating the operation of the robot to the operation of the machine tool are preliminarily stored. However, it is possible for a movable part of the industrial robot to perform an erroneous movement in the case where the prescribed instructions include any erroneous instructions or in the case where noise signals are applied from outside the robot when the robot is not operating. For the purpose of preventing the occurrence of such erroneous movement of the industrial robot, conventional safeguard methods have been employed, such as a method of providing an emergency stop means for the robot, a method of limiting the movable range of the movable part of the robot by the employment of some hardware or some software means, or a method of interlocking the robot and the machine tool so that the movable part of the robot is permitted to move only when a predetermined condition signal from the robot controller and a predetermined condition signal from the controller of the machine tool are simultaneously issued. However, these conventional methods are based on electrical or electronic techniques. Therefore, mechanical prevention of the erroneous movement of the movable part of the robot is not guaranteed. Accordingly, the possibility of the occurrence ·of an uncontrolled erroneous movement of the movable part of the robot due to the application of noise signals from outside the robot when the robot is not operating and when the operator approaches the robot to make a change in the operating steps of the machine tool exists. Thus, the operator may be injured.

DISCLOSURE OF THE INVENTION

Accordingly, an object of the present invention is to provide a safeguard machanism of an industrial robot which is provided with means for mechanically and tightly locking a movable part of the robot as required for the purpose of mechanically preventing the occurrence of any uncontrolled erroneous movement of the movable part of the robot.

In accordance with the present invention, a safeguard mechanism of an industrial robot for mechanically locking a movable part of the industrial robot and thereby preventing the occurrence of any uncontrolled movement of the movable part is provided, which mechanism comprises a locking mechanism including a pair of male and female engagement means provided between the movable part of the industrial robot and a separately disposed lock plate.

BRIEF DESCRIPTION OF THE DRAWINGS

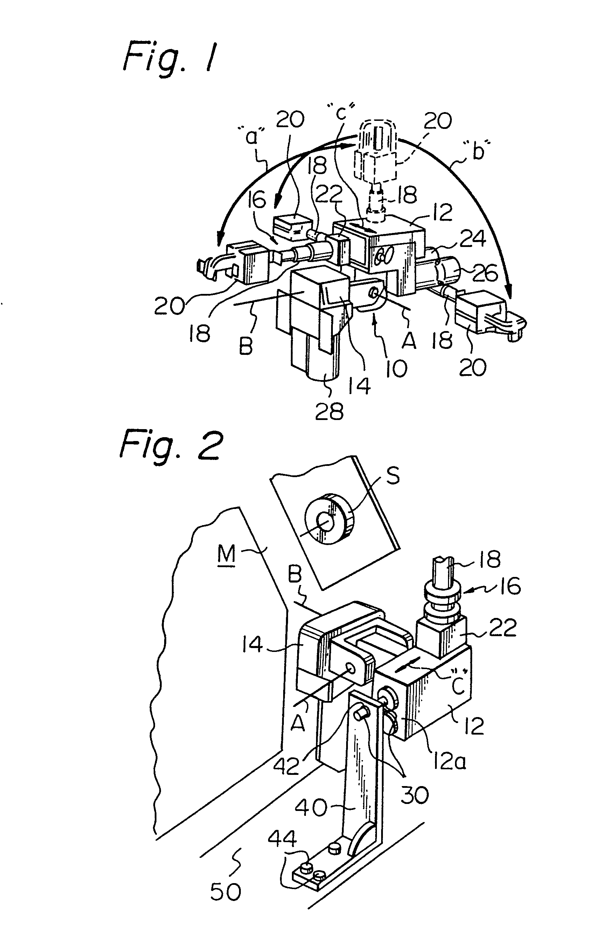

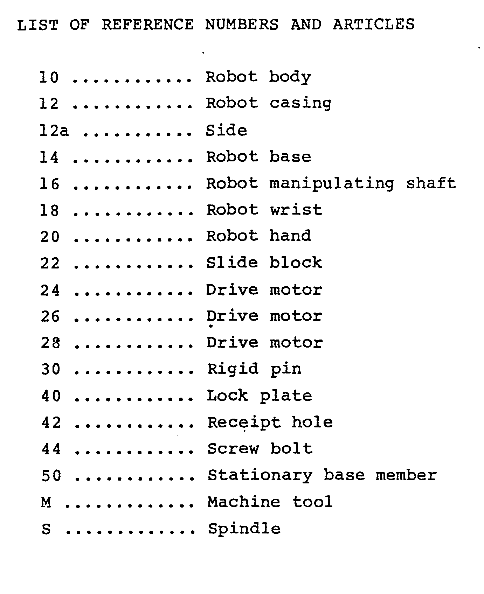

Figure 1 is a perspective view of an industrial robot provided with a safeguard mechanism according to the present invention, and Fig. 2 is a perspective view of an important portion of the safeguard mechanism according to an embodiment of the present invention.

BEST MODE FOR CARRYING OUT THE INVENTION

Referring to Fig. 1, which illustrates an industrial robot provided with a safeguard mechanism of the present invention, the industrial robot has a robot body 10 having a robot casing 12 and a robot base 14. The robot casing 12 is pivotable with respect to the robot base 14, as will be described later. The industrial robot per se can be mounted on the sides of machines, such as machine tools, by means of the robot base 14. It should therefore be understood that the robot casing 12 is a part of a movable part of the industrial robot. On the robot casing 12 is slidably mounted a robot manipulating shaft 16 by means of a slide block 22 so that the robot manipulating shaft 16 is slidable in the direction shown by the arrow "C". The robot manipulating shaft 16 is comprised of a robot wrist 18, of which the innermost end is connected to the slide block 22, and a robot hand 20 attached to the outermost end of the robot wrist 18. The robot manipulating shaft 16 and the slide block 22 form a part of the movable part of the robot. Reference numerals 24, 26, and 28 designate drive motors, respectively, for driving the manipulating operation of the above-mentioned robot movable part, and the drive motors 24, 26, and 28 are driven by command signals fed from a separate robot controller (not illustrated in Fig. 1) so that a controlled manipulating operation of the movable part of the robot is conducted. Therefore, in the inside of the robot casing 12 and the robot base 14, there are incorporated mechanical elements of rotating mechanisms and feed mechanisms which are interconnected to the drive motors 24, 26, and 28. In the aforementioned movable part of the industrial robot, the robot casing 12 is turnable about the axis "A". The turning motion of the robot casing 12 is automatically accompanied by the turning motion of the robot manipulating shaft 16 in the direction shown by the arrow "a" between a standing position as shown by the dotted lines and a falling position as shown by the solid lines. Thus, by the turning motion of the robot manipulating shaft 16, the industrial robot can perform, for example, the attaching of a workpiece to or the detaching of a workpiece from the machine tool. The robot casing 12 is also turnable about the axis "B". This turning motion of the robot casing 12 about the axis "B" is automatically accompanied by the turning motion of the robot manipulating shaft 16 in the direction shown by the arrow "b" between the two falling positions shown by the solid lines. During this turning motion of the robot manipulating shaft 16 in the direction shown by the arrow "b", the industrial robot can, for example, place a workpiece onto a workpiece table (not illustrated in Fig. 1) or remove a workpiece from a workpiece table. Further, the robot manipulating shaft 16 is capable of sliding in the direction shown by the arrow "c" when the shaft 16 is in any one of the standing positions or the falling positions. As will be understood from the foregoing description, during the turning motion or the sliding motion of the movable part in response to the commands from the robot controller, the industrial robot can perform diverse kinds of manipulating operations required by machines, such as machine tools. At this stage, it often happens that an operator approaches or comes within the movable range of the movable part of the robot. For example, the operator might come close to the spindle of the machine tool for the purpose of setting up the machine tool for work to be subsequently done. In such a case, the operation of the industrial robot is electrically interrupted in the state where the robot manipulating shaft 16 remains in a standing position as shown in Fig. 1. However, the supply of electric power from the elctric power source to the robot is not discontinued. Therefore, during the setting up operation by the operator, it is possible for some noise signals to enter the robot controller from the outside. As a result, an uncontrolled movement of the robot manipulating shaft 16, such as an unexpected falling movement of the manipulating shaft 16 from a standing position to a falling position along the arrow "a", might occur, resulting in the manipulating shaft 16 striking and injuring the operator. In accordance with the present invention, there is provided a safeguard mechanism capable of mechanically locking the movable part of the industrial robot when an operator approaches or comes within the movable range of the movable part of the robot.

An embodiment of the safeguard mechanism will now be described with reference to Fig. 2.

Figure 2 is a perspective view of the safeguard mechanism according to an embodiment of the present invention and is an important part of the industrial robot. The same reference numbers as those in Fig. 1 designate similar robot parts. In Fig. 2, the industrial robot per se is mounted on a stationary base member 50 at a position opposite to a spindle portion S of an associated machine tool M by means of the stationary robot base 14. The safeguard mechanism of the embodiment of Fig. 2 is comprised of a rigid pin 30 projecting from a side 12a of the robot casing 12, and a lock plate 40 having a receipt hole 42 into which the rigit pin 30 is engaged when the lock plate 40 is appropriately positioned onto the stationary base member 50. That is, the lock plate 40 forms a lock table, and the rigid pin 30 and the receipt hole 42 of the lock plate 40 form a mechanical lock mechanism comprising a pair of male and female engagement means. Figure 2 illustrates a state where the male and female engagement means are engaged with one another so as to provide a mechanical lock condition for the movable part of the industrial robot. Given the condition in Fig. 2, since any turning motion of the robot casing 12 forming a part of the movable part of the industrial robot about the axis "A" or "B" is mechanically prevented by the mechanical engagement of the rigid pin 30 and the receipt hole 42 of the lock plate 40, the occurrence of unexpected, uncontrolled movements of the robot manipulating shaft 16 is prevented. Thus, the safety of the operator of the machine tool is guaranteed. It should be understood that the lock plate 40 may be attached to the stationary base member 50, as required, by means of screw bolt means 44 at the position where the receipt hole 42 is engaged with the rigid pin 30. Alternatively, the lock plate 40 may be fixed to a predetermined position on the stationary base member 50 so that the receipt hole 42 of the lock plate 40 is coaxial with the rigid pin 30. As a result, if the industrial robot is slid on the stationary base member 50 along an appropriate guide by the control of the robot controller or by manual operation, the rigid pin 30 can be engaged with the receipt hole 42 of the lock plate 40, as required. On the contrary, the lock plate 40 may be arranged so as to be slid on the stationary base member 50 along an appropriate guide until the receipt hole 42 of the lock plate 40 is engaged with the rigid pin 30. Further, if the L-shaped lock plate 40 is formed as a folding member which can be collapsed at the corner, it will be possible to erect the collapsed lock plate before the receipt hole 42 of the lock plate 40 engages with the rigid pin 30 of the industrial robot.

In the foregoing explanation of the embodiment, it is disclosed that the rigid pin 30 is fixedly attached to the movable part of the industrial robot, and the lock plate 40 arranged on the stationary base member 50 is formed with the receipt hole 42. However, it should be understood that in an alternative embodiment of the male and female engagement means, the rigid pin 30 may be attached to the lock plate 40, and the side 12a of the robot casing 12 forming a part of the movable part of the industrial robot may be formed with the receipt hole with which the rigid pin 30 of the lock plate 40 engages as required.

From the foregoing description of the embodiments of the present invention, it will be understood that in accordance with the present invention, there is provided a safeguard mechanism for mechanically locking the movable part of the industrial robot. Therefore, when the industrial robot with the safeguard mechanism of the present invention is operated in association with, for example, machine tools, the safety of the operator of the machine tools can be guaranteed even if the operator approaches the machine tools on the industrial robot per se for the purpose of setting up the machine tools. Further, the occurrence of an accident, such as breakage of the robot per se or machines disposed around the robot, due to uncontrolled operation of the industrial robot can be avoided with certainty.

CLAIMS

1. A safeguard mechanism of an industrial robot for mechanically locking a movable part of the industrial robot, thereby preventing the occurrence of any uncontrolled movement of the movable part, characterized by comprising a locking mechanism including a pair of male and female engagement means provided between the movable part of the industrial robot and a separately disposed lock plate.

2. A safeguard mechanism of an industrial robot, according to claim 1, wherein said industrial robot and said separately disposed lock plate are arranged side by side on a stationary base member, and wherein said male and female engagement means are disposed so as to oppose one another, so that when said industrial robot is moved on said stationary base member, said male and female engagement means are engaged with one another.

3. A safeguard mechanism of an industrial robot, according to claim 1 or 2, wherein said separately disposed lock plate is formed as a substantially L-shaped lock plate and wherein said movable part is provided with a rigid projecting pin which is engageable with a receipt hole formed in said lock plate, said rigid projecting pin and said receipt hole forming said pair of male and female engagement means.

4. A safeguard mechanism of an industrial robot, according to claim 3, wherein said lock plate is fixable to said stationary base member by means of screw bolt means.

*Fig. 1*

*Fig. 2*

LIST OF REFERENCE NUMBERS AND ARTICLES

10 ............. Robot body

12 ............. Robot casing

12a ............ Side

14 ............. Robot base

16 ............. Robot manipulating shaft

18 ............. Robot wrist

20 ............. Robot hand

22 ............. Slide block

24 ............. Drive motor

26 ............. Drive motor

28 ............. Drive motor

30 ............. Rigid pin

40 ............. Lock plate

42 ............. Receipt hole

44 ............. Screw bolt

50 ............. Stationary base member

M .............. Machine tool

S .............. Spindle

# INTERNATIONAL SEARCH REPORT

**0056419**

International Application No PCT/JP81/00168

## I. CLASSIFICATION OF SUBJECT MATTER (if several classification symbols apply, indicate all) 3

According to International Patent Classification (IPC) or to both National Classification and IPC

Int. Cl.$^3$ B25J 19/00

## II. FIELDS SEARCHED

| Minimum Documentation Searched 4 | |
|---|---|
| Classification System | Classification Symbols |
| I P C | B25J 9/00, B25J 17/00, B25J 19/00, B66C 23/00 |

Documentation Searched other than Minimum Documentation
to the Extent that such Documents are Included in the Fields Searched 5

| | |
|---|---|
| Jitsuyo Shinan Koho | 1959 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | | Relevant to Claim No. 18 |
|---|---|---|---|
| X | JP, Y2, 52-28881 <br> Kubota, Ltd. | 1977-7-1 | 1 – 2 |
| A | JP, A, 54-51172 <br> Kobe Steel, Ltd. | 1980-12-25 | 1 – 4 |
| A | JP, Y1, 44-4193 <br> Tadano Tekkosho Kabushiki Kaisha | 1969-2-17 | 1 – 4 |
| X | JP, A, 53-43359 <br> Blohm und Voss AG | 1978-4-19 | 1 – 2 |

* Special categories of cited documents: 16

"A" document defining the general state of the art
"E" earlier document but published on or after the International filing date
"L" document cited for special reason other than those referred to in the other categories
"O" document referring to an oral disclosure, use, exhibition or other means

"P" document published prior to the International filing date but on or after the priority date claimed
"T" later document published on or after the International filing date or priority date and not in conflict with the application, but cited to understand the principle or theory underlying the invention
"X" document of particular relevance

## IV. CERTIFICATION

| Date of the Actual Completion of the International Search 3 | Date of Mailing of this International Search Report 3 |
|---|---|
| October 16, 1981 (16.10.81) | October 26, 1981 (26.10.81) |
| International Searching Authority 1 | Signature of Authorized Officer 10 |
| Japanese Patent Office | |

Form PCT/ISA/210 (second sheet) (October 1977)